(19) Europäisches Patentamt
European Patent Office
Office européen des brevets

(11) Publication number: **0 304 296 B1**

(12) **EUROPEAN PATENT SPECIFICATION**

(45) Date of publication of patent specification: **03.06.92** (51) Int. Cl.$^5$: **G03C 1/89**

(21) Application number: **88307643.2**

(22) Date of filing: **18.08.88**

(54) **Photographic element containing polyphosphazene antistatic composition.**

(30) Priority: **20.08.87 US 87479**
**20.08.87 US 87480**

(43) Date of publication of application:
**22.02.89 Bulletin 89/08**

(45) Publication of the grant of the patent:
**03.06.92 Bulletin 92/23**

(84) Designated Contracting States:
**BE DE FR GB NL**

(56) References cited:
**EP-A- 0 170 529**

**CHEMICAL ABSTRACTS, vol. 106, no. 20, 18th May 1987, page 193, no. 159575v, Columbus, Ohio, US; & JP-A-61 254 626 (RESEARCH CORP.) 12-11-1986**

**SOLID STATE IONICS, vol. 18 & 19, January 1986, pages 258-264, Elsevier Science Publishers B.V.(North-Holland Physics Publishing Division), Amsterdam, NL; P.M.BLONSKY et al.: "Complex formation and ionic conductivity of polyphosphazene solid electrolytes"**

(73) Proprietor: **EASTMAN KODAK COMPANY (a New Jersey corporation)**
**343 State Street**
**Rochester New York 14650(US)**

(72) Inventor: **Chen, Janglin c/o Eastman Kodak Company**
**Patent Department 343 State Street**
**Rochester New York 14650(US)**
Inventor: **Ferrar, Wayne Thomas c/o Eastman Kodak Company**
**Patent Department 343 State Street**
**Rochester New York 14650(US)**
Inventor: **Kelly, James Edward c/o Eastman Kodak Company**
**Patent Department 343 State Street**
**Rochester New York 14650(US)**
Inventor: **Marshall, Akemi Saji c/o Eastman Kodak Company**
**Patent Department 343 State Street**
**Rochester New York 14650(US)**

(74) Representative: **Nunney, Ronald Frederick Adolphe et al**
**Kodak Limited Patent Department Headstone Drive**
**Harrow Middlesex HA1 4TY(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

**MACROMOLECULES, vol. 19, no. 6, June 1986, pages 1508-1512, American Chemical Society, Washington, D.C., US; H.R.ALLCOCK et al.: "Polyphosphazenes with etheric side groups: Prospective biomedical and solid electrolyte polymers"**

## Description

This invention relates to antistatic compositions and photographic elements containing them. Specifically, this invention relates to antistatic compositions comprising a polyphosphazene and a salt, and to photographic elements having antistatic layers comprising such antistatic compositions.

Static electricity buildup is common on elements having an electrically insulating support. In photographic elements, radiation-sensitive emulsions are usually coated on an insulating support, rendering the element susceptible to the buildup of static electric charge. This can cause a number of problems. Among the most serious of these is that the discharge of accumulated static charges exposes the radiation-sensitive layer of the element to light, causing marks on the element when developed.

In order to reduce the accumulation of static charge on elements with electrically insulating supports, the support is often coated with a layer containing an antistatic composition that increases electrical conductivity. Alternatively, the antistatic composition can be incorporated into an existing layer of the element. Various materials have been used as antistatic compositions, such as polymers, surface active agents, salts, and combinations thereof. Polyethylene oxide/salt combinations are often used as antistatic compositions in photographic elements. Such compositions are described, for example, in U.S. Patents 4,272,616, 4,582,781, and 4,610,955. A number of these antistatic compositions exhibit problems, especially when used in photographic elements. For example, they can cause fog or loss of photographic sensitivity.

The object of the present invention is to provide antistatic compositions that effectively reduce the accumulation of static charge while exhibiting reduced susceptibility to disadvantages such as those described above.

The present invention provides a photographic element having an antistatic composition comprising a polyphosphazene comprising repeating units of formula (I):

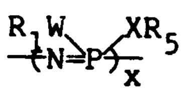

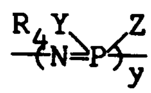

and a salt that complexes with the above-described polyphosphazene. In the above formula, x and y represent molar percentages, with x being 80 to 100%, and y being 0 to 20%. $R_1$ and $R_5$ each independently represent the formula $-(R_2-O)_n-R_3$ where n is 1 to 50 and $R_3$ is alkyl or alkenyl of from 1 to 18 carbon atoms. In the repeating unit $-(R_2-O)-$, $R_2$ is randomly alkyl of from 2 to 4 carbon atoms, having from 2 to 4 carbon atoms in the straight chain between oxygen atoms.

W, X, and Y each independently represents -O-, -S-,

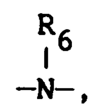

, or

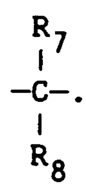

Z represents $-OR_9$, $-SR_{10}$,

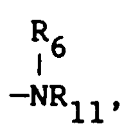

, or

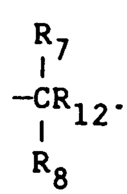

$R_4$, $R_6$, $R_7$, and $R_8$ each independently represents H, alkyl, or alkenyl of from 1 to 18 carbon atoms. $R_9$ and $R_{10}$ each independently represents alkyl or alkenyl of from 1 to 18 carbon atoms or $-(R_{13}-O)_m-R_{14}$. $R_{11}$ and $R_{12}$ each independently represents H, alkyl or alkenyl of from 1 to 18 carbon atoms, or $-(R_{13}-O)_m-R_{14}$. $R_{13}$ is randomly alkyl of from 2 to 4 carbon atoms, having from 2 to 4 carbon atoms in the straight chain

between oxygen atoms. $R_{14}$ is alkyl or alkenyl of from 1 to 18 carbon atoms and m is 0 to 50.

The photographic elements of the invention effectively exhibit effective antistatic properties and do not exhibit adverse sensitometric effects, such as fogging.

Polyphosphazene compounds that are useful in the present invention are those of formula (I). In that formula, x and y represent molar percentages, with x being 80 to 100% and y being 0 to 20%. Preferred values for x are from 90 to 100% and preferred values for y are from 0 to 10%.

$R_1$ and $R_5$ are independently represented by the formula $-(R_2-O-)_n-R_3$. Useful compounds are those where n is from 1 to 50. Especially preferred values for n are from 2 to 10.

$R_2$ and $R_{13}$ are each independently randomly alkyl of from 2 to 4 carbon atoms and preferably 2 to 3 carbon atoms, having from 2 to 4 carbon atoms and preferably 2 carbon atoms in the straight chain between oxygen atoms. By "randomly alkyl of from 2 to 4 carbon atoms," it is meant that the $R_2$ or $R_{13}$ in each of the repeating units $-(R_2-O-)-$ or $-(R_{13}-O)-$ may be different from other $R_2$'s or $R_{13}$'s, as long as each of the $R_2$'s or $R_{13}$'s falls within the overall limitation of being between 2 to 4 carbon atoms, having from 2 to 4 carbon atoms in the straight chain between oxygen atoms. For example, where n = 3 and $R_3$ is ethyl, $R_1$ could be $-CH_2CH_2-O-CHCH_3CHCH_3-O-CH_2CHCH_3-O-C_2H_5$. Examples of $R_2$ include ethyl, n-propyl, isopropyl, and n-butyl.

$R_3$ and $R_{14}$ each independently represents (and $R_9$ and $R_{10}$ may each independently represent) alkyl or alkenyl of from 1 to 18 carbon atoms. Preferably, they are alkyl or alkenyl of from 1 to 8 carbon atoms. Also useful are substituted alkyl or alkenyl groups of from 1 to 18 carbon atoms. Examples of substituents include halogen such as F or Cl, amino groups such as $NH_2$, $NHCH_3$, or $N(CH_3)_2$, and thio-containing groups, such as alkylthio (e.g., methylthio, ethylthio) or sulfonate. A preferred substituted $R_3$ is a terminally halogen substituted alkyl group, such as a perfluoroalkyl. Examples of $R_3$ include $-CH_3$, $-CH_2CH_3$, $-CH_2CF_3$, $-CH_2CCl_3$, $-(CH_2)_5CH_3$,$-(CH_2)_4-CH=CH-CH_3$ and $-CH_2-O-CH_3$.

$R_4$, $R_6$, $R_7$, and $R_8$ each independently represents (and $R_{11}$ and $R_{12}$ may each independently represent) alkyl or alkenyl of from 1 to 18 carbon atoms. Preferably, they are H, alkyl, or alkenyl of from 1 to 8 carbon atoms. Also useful are substituted alkyl or alkenyl groups of from 1 to 18 carbon atoms. Examples of substituents include halogen such as F or Cl, amino groups such as $NH_2$, $NHCH_3$, or $N(CH_3)_2$, and thio-containing groups, such as alkylthio (e.g., methylthio, ethylthio) or sulfonate. Examples of $R_4$, $R_6$, $R_7$, $R_8$, $R_{11}$, and $R_{12}$ include $-CH_3$, $-CH_2CH_3$, $-CH_2CF_3$, $-CH_2CCl_3$, $-(CH_2)_5CH_3$, $-(CH_2)_4-CH=CH-CH_3$ and $-CH_2-O-CH_3$.

The molecular weight of the compound of formula (I) is preferably between 2000 and $10^7$, and more preferably between $10^4$ and $10^6$, as determined by the light scattering method.

The salts that are useful in the present invention are those that complex with the polyphosphazene of formula (I). Any salt that complexes with the polyphosphazene is useful. Whether a salt complexes with the polyphosphazene can be easily determined methods known in the art, such as by electrical conductivity measurements, differential thermal analysis (measuring changes in glass transition temperature), vibrational spectroscopy, and nuclear magnetic resonance, or a combination thereof. Further disclosure on polyphosphazene/salt complex formation is presented in Blonsky, Shriver, Austin, & Allcock, Solid State Ionics 1986, 18-19, pp. 258-64.

A number of factors can be utilized to determine whether the salt will be likely to complex with the polyphosphazene. The greater the flexibility of the polymer backbone of the polyphosphazene, the more receptive it is to complexing with all salts. Similarly, the higher the concentration of polar groups in the polyphosphazene, the more receptive it is to complexing with all salts. Salts that have a greater solubility with the polyphosphazene will tend to complex with the polyphosphazene to a greater extent than salts with lower solubility. Salts with a low lattice energy tend to complex with the polyphosphazene to a greater extent than salts with a high lattice energy. Salts with bulky anions tend to complex with the polyphosphazene to a greater extent than salts with smaller anions. Also, salts with lower valence charges (e.g., mono and divalent salts) tend to complex with the polyphosphazene to a greater extent than salts with greater valence charges (e.g., trivalent salts).

Preferred examples of salts useful in the invention include $KCF_3SO_3$, $Ca(CF_3SO_3)_2$, $Zn(BF_4)_2$, $LiBF_4$, $NaBF_4$, $NaCF_3SO_3$, $LiCF_3SO_3$, $KCF_3CO_2$, $LiCF_3CO_2$, $NaCF_3CO_2$, $KC_3F_7CO_2$, $LiC_3F_7CO_2$, $NaC_3F_7CO_2$, $C_4F_9SO_3K$, and $KPF_6$. Other examples include $NaB(C_6H_5)_4$, $LiClO_4$, LiI, NaI, KI, KSCN, LiSCN, and NaSCN. One skilled in the art could easily choose a number of additional salts, given the salts exemplified above, the factors leading to a likelihood of the salt complexing with the polyphosphazene, and the above-described tests to determine whether the salt complexes with the polyphosphazene.

Although not required, the polyphosphazene and salt used in the photographic element of the invention are preferably present in the element along with a binder. When coated with a binder, the antistatic composition useful in the invention will tend to have a greater concentration of polyphosphazene/salt

complex near the surface of a coating, giving it superior reductions in surface resistivity. The binder can be any of a number of known binders useful in photographic elements. The invention is advantageously utilized with a hydrophilic binder.

Binders useful in the elements of the invention include naturally occurring materials, such as proteins, protein derivatives, cellulose derivatives such as cellulose esters, gelatin such as alkali-treated gelatin or acid-treated gelatin, gelatin derivatives such as acetylated gelatin and phthalated gelatin, polysaccharides such as dextran, gum arabic, zein, casein, pectin, collagen derivatives, collodion, agar-agar, arrowroot, albumin, and the like. All these materials are well-known in the art.

Other binders include colloidal albumin or casein, cellulose compounds such as carboxymethyl cellulose, hydroxyethyl cellulose, etc., and synthetic hydrophilic colloids such as polyvinyl alcohol, poly-N-vinylpyrrolidone, polyacrylic acid copolymers, polyacrylamide or its derivatives or partially hydrolyzed products thereof, and solvent and aqueous applied hydrophobic polymers such as poly(methyl methacrylate) and acrylic latexes. Two or more of these binders may be combined. A preferred binder is gelatin, including lime-treated gelatin, acid-treated gelatin, and enzyme-treated gelatin.

The polyphosphazene of formula (I) is generally present in the antistatic composition useful in a photographic element of the invention in an amount of from 1 to 50 weight percent on a dry weight basis and preferably from 5 to 30 weight percent. The salt is generally present in the composition of the invention in an amount of from 1 to 20 weight percent on a dry weight basis and preferably from 2 to 10 weight percent. The binder, if present, is generally present in the antistatic composition useful in the invention in an amount of from 10 to 95% on a dry weight basis and preferably from 60 to 95 weight percent.

The composition useful in the present invention can be made by reacting a polydichlorophosphazene with an alkoxide, optionally in the presence of a tetra-n-butyl-ammonium bromide to yield the compound of formula (I). This reaction procedure, including salt complexation, is described in further detail in Journal of the American Chemical Society, 106, 6854-55 (1984) and in Macromolecules, 19, 1508-12 (1986). The polymer-salt complex can then be mixed with a binder to form the composition of the invention.

The composition useful in the invention can be applied to a wide variety of supports to form a wide variety of useful elements with antistatic properties. The support can be, for example, polymeric materials such as poly(ethylene terephthalate), cellulose acetate, polystyrene, poly(methyl methacrylate), and the like. Other supports include glass, paper such as resin-coated paper, metals, fibers including synthetic fibers. Planar supports, such as polymeric films useful in photographic elements, are particularly useful. In addition, the composition of the invention can be coated onto virtually any article where it is desired to decrease resistivity. The antistatic composition of the invention will tend to have a greater concentration of polyphosphazene/salt complex near the surfaceof a coating, giving it superior reductions in surface resistivity. The compositions can be coated on plastic parts to reduce the unwanted buildup of static electricity. The composition can also be coated on polymeric spheres or other shapes such as those used for electrophotographic toners, and the like.

The antistatic composition useful in the invention can be applied to the support using any of a number of well-known methods. For example, the compositions can be applied by spray coating, fluidized bed coating, dip coating, doctor blade coating, extrusion coating, and other well-known methods of application.

Any type of the photographic element can utilize the above-described antistatic composition, according to the invention. Examples of such photographic elements include color and black and white negative film, color and black and white reversal film, color and black and white paper, x-ray film, film for use in xerographic processes, graphic arts films, diffusion transfer elements, and the like.

Photographic elements of the present invention generally comprise a number of layers. These layers include radiation sensitive layers such as silver halide layers. Other light-sensitive materials include diazo-type compositions, vesicular image-forming compositions, photopolymerizable compositions, electrophotographic compositions including those comprising radiation-sensitive semiconductors, and the like. Sensitizing dyes and color dye-forming couples may be included in the silver halide layers, as described in Research Disclosure, Item 17643, December, 1978. Other materials and layers that can be included in photographic elements useful in the invention include development modifiers, filter dyes, gelatin hardeners, coating aids, and the like, as described in the above-identified Research Disclosure.

Layers containing the antistatic composition can be in any position of the photographic element. An advantageous position for the antistatic composition to be coated is in a layer directly on the support, which can have a thin subbing layer as is known in the art. Alternatively, the antistatic layer can be on the same side of the support as the radiation-sensitive materials of the photographic element, with protective layers included as interlayers or overcoats, if desired. An overcoat layer may be particularly advantageous if the antistatic composition does not include therewith a binder.

In some embodiments of the invention, it may be desirable to coat the layer of the antistatic

composition with a protective layer. The protective layer may be desirable for a number of reasons. For example, the protective layer can be an abrasion-resistant layer or a layer that provides other desirable physical properties. In many instances, it may be desirable to protect the antistatic composition from conditions that could cause leaching of one of the components of the composition. Where the support to which the antistatic composition is applied also carries a basic layer, it may be desirable to provide a barrier in the form of a protective layer to prevent contact of the antistatic composition by the base. The protective layer is preferably a film-forming polymer that can be applied using known coating techniques. Examples of such film-forming polymers include cellulose acetate, cellulose acetate butyrate, poly(methyl methacrylate), polyesters, polycarbonates, and the like.

The practice of the invention is further illustrated by the following examples.

In these examples, hexachlorocyclotriphosphazene was recrystallized from hexane and sublimed. 2-(2-methoxyethoxy)ethanol, 2-(2-ethoxyethoxy)ethanol and 2,2,2-trifluoroethanol were dried over calcium oxide and distilled. Carbowax® 350 (Aldrich) was dried azeotropically before use. Tetrahydrofuran (THF) was dried over sodium benzophenone and distilled. Tetra-n-butylammonium bromide was dried in vacuum while being heated with refluxing toluene. Most experimental manipulations were performed under an atmosphere of dry argon. The reactions were typically carried out in a two liter three neck flask fitted with a mechanical stirrer, a reflux condenser with an argon inlet, and an addition funnel. All $^{31}P$ chemical shifts were referenced to 80% $H_3PO_4$ at 0 PPM with downfield shifts reported as positive, and the spectra were $^{1}H$ decoupled.

Preparation 1 - Poly(dichlorophosphazene)

Poly(dichlorophosphazene) was prepared by the thermal polymerization of hexachlorocyclotriphosphazene ($(NPCl_2)_3$) at 250 ° C. Polymerization of $(NPCl_2)_3$ was carried out in sealed Pyrex tubes of size 23 x 3.5 cm (200 g scale). Crushed Pyrex glass (2 g) was added to the tube to facilitate initiation. The tubes were evacuated on a vacuum line for 30 minutes before they were sealed. The sealed tubes were heated at 250 ° C until the contents became viscous, about 24 hours. After the tubes had cooled to room temperature, they were placed in a glove bag filled with argon, the Pyrex broken open and the contents placed in a sublimator. The bulk of the starting trimer (50 g) was removed from the polymer during the sublimation (50 ° C, 16 hours). The remaining polymer was a white material that was highly elastomeric and formed clear viscous solutions in tetrahydrofuran and toluene.

Preparation 2 - Poly[bis(2-(2-methoxyethoxy)ethoxy) phosphazene]

A solution of poly(dichlorophosphazene) (33 g, 0.28 mol) in tetrahydrofuran (500 ml) was added over a 3 hour period to a stirred suspension of sodium 2-(2-methoxyethoxy)ethoxide, prepared from sodium hydride (40 g, 0.83 mol) and 2-(2-methoxyethoxy)ethanol (150 g, 1.25 mol) in THF (500 ml). Tetra-n-butylammonium bromide (0.5 g) was added. The reaction was stirred for 48 hours at room temperature and then was refluxed for 1 hour to finish the substitution. The reaction was neutralized with 5% HCl. The reaction mixture was dialyzed against water and freeze-dried. The freeze-dried polymer (60 g) was dissolved in acetone (800 ml) and filtered through a coarse glass frit. It was then precipitated into heptane (4 x 1500 ml). The polymer was redissolved in acetone and reprecipitated into heptane as before. A $^{31}P\{^{1}H\}$ NMR spectrum consisted of a sharp singlet at -7.6 PPM, which was indicative of total halogen replacement. Yield was 23%. IR (P = N), 1240 $cm^{-1}$. Intrinsic viscosity was 1.06 dl/g. Low angle laser light scattering gave an apparent weight average molecular weight of 5.4 x $10^5$. Elemental analysis (found/theoretical, %): N (5.0/4.9), C (41.8/42.4), H (7.6/7.8), P (11.3/10.9), Cl (<0.3/0.0).

Preparation 3 -Poly[(2-(2-methoxyethoxy)ethoxy)$_{.9}$(trifluoroethoxy)$_{.1}$ phosphazene]

A solution of sodium trifluorethoxide was prepared from sodium spheres (3.1 g, 0.14 g-atoms) and trifluoroethanol (20 ml, 0.26 mol) in THF (150 ml) and added over a 2 hour period to a stirred solution of poly(dichlorophosphazene) (65 g, 0.56 mol) in THF (600 ml). Tetra-n-butylammonium bromide (2.0 g) had been added to the polymer solution previously. A previously prepared solution of sodium 2-(2-methoxyethoxy)ethoxide made from sodium spheres (28 g, 1.2 g-atoms) and 2-(2-methoxyethoxy)ethanol (325 g, 2.7 mol) in THF (500 ml), was subsequently added to the polymer mixture over a 5-hour period. The reaction stirred for 72 hours at room temperature and was then neutralized with 5% HCl. The reaction mixture was poured into a 4 liter separatory funnel and allowed to separate into two layers. The top layer (THF) was collected, the solvent removed on a rotary evaporator and precipitated into large quantities of

heptane to yield an amber solid. This material was dialized against water for 24 hours and freeze dried. A $^{31}P\{^1H\}$ NMR spectrum consisted of a broad peak between -5 to -9 PPM. IR (P=N), 1240 $cm^{-1}$. Intrinsic viscosity (THF) was 0.57 dl/g.

Preparation 4 - [Poly(bis(Carbowax-350)phosphazene]

A solution of poly(dichlorophosphazene) (20.7 g, 0.178 mol) in THF (500 ml) was added over a 2 hour period to a stirred suspension of the sodium salt of Carbowax® 350 in the presence of tetra-n-butylammonium bromide. The alkoxide solution was prepared from sodium spheres (15.9 g, 0.691 mol) and Carbowax® 350 (500 g, 1.43 mol). The reaction was stirred for 18 hours at room temperature and then refluxed for 24 hours. The reaction mixture was neutralized with 5% HCl and then dialyzed against water to yield a gel. A $^{31}P\{^1H\}$ spectrum consisted of a large peak at 7 PPM and two small peaks at 4 and 5 PPM. IR (P=N). 1240 $cm^{-1}$. Elemental analysis (found/theoretical, %): N (1.6/1.7), C (49.6/50.2), H (8.4/8.6), P (4.6/3.8) Cl (<0.3/0.0).

Preparation 5 -Poly(bis(2-(2-ethoxyethoxy)ethoxy)phosphazene]

A solution of poly(dichlorophosphazene) (29.6 g, 0.252 mol) in THF (500 ml) was added over a 0.5 hour period to a stirred solution of sodium 2-(2-ethoxyethoxy)ethoxide, prepared from sodium spheres (14.9 g, 0.648 g-atoms) and 2-(2-ethoxyethoxy)ethanol (200 g, 1.49 mol) in THF (500 ml). Tetra-n-butylammonium bromide (1.1 g) was added. The reaction was stirred at room temperature for 72 hours, stirred at reflux for 24 hours, then stirred at room temperature for an additional 24 hours. The reaction mixture was neutralized with 5% HCl. Upon standing, two layers formed. The top layer was dialized in water, which resulted in precipitation of the polymer (100 g). The polymer was dissolved in THF (500 ml) and precipitated into water. A $^{31}P\{^1H\}$ NMR spectrum consisted of a sharp singlet at -6.7 PPM, which was indicative of total halogen replacement. Intrinsic viscosity (THF) was 0.89 dl/g. Low angle laser light scattering gives apparent molecular weight of 6.0 x $10^5$. IR (P=N), 1240 $cm^{-1}$. Elemental analysis (found/theoretical, %): N (4.5/4.5), C (46.1/46.3), H (7.9/8.4), P (9.9/9.9), Cl (<0.3/0).

Example 1

A radiographic silver bromide emulsion layer was coated on a polyester support at a level of 24 mg/$dm^2$ silver and 28.3 mg/$dm^2$ gelatin. The silver bromide comprised tabular grains of 1.75$\mu$ diameter and 0.14$\mu$ thickness. The emulsion was spectrally sensitized with anydro-5,5-dichloro-9-ethyl-3,3-di(3-sulfopropyl)-oxacarbocyanine hydroxide, triethylamine salt. A split-layer protective overcoat was applied over the emulsion layer. The interlayer contained gelatin at 3.2 mg/$dm^2$. The top layer contained gelatin at 3.2 mg/$dm^2$ and a polyphosphazene and salt as indicated in Table VI. Surface resistivity was measured with a Keithly picoammeter according to the procedure of ASTM standard D257, at 70°F and 20% and 50% relative humidity. The results are reported in Table I.

**TABLE I**

| Polyphosphazene, Level (mg/dm$^2$) | Salt, Level (mg/dm$^2$) | Surface Resistivity Ohm/square 50% RH | Surface Resistivity Ohm/square 20% RH |
|---|---|---|---|
| none | none | $8.3 \times 10^{10}$ | $4.2 \times 10^{13}$ |
| poly[bis(2-(2-methoxyethoxy)-ethoxy)phosphazene], 3.2 | $CF_3SO_3K$, 1.1 | $4.0 \times 10^{9}$ | $2.9 \times 10^{10}$ |
| poly[(2-(2-methoxy-ethoxy)ethoxy$_{.9}$ (trifluoroethoxy)$_{.1}$ phosphazene], 3.2 | $CF_3SO_3K$, 1.1 | $8.0 \times 10^{9}$ | $1.2 \times 10^{12}$ |

The results in Table I indicate that the elements of the invention exhibit effective antistatic properties.

For comparison, radiographic elements were prepared as described above, but using prior art antistatic compositions of commercially available surface active polyoxyethylenes and salts, as indicated in Table II. Identical elements were evaluated as described below, either fresh or after being subjected to conditioning of 120°F and 50% relative humidity for one week. For evaluation, the elements were exposed through a graduated density scale for 1/50 of a second to a 600 watt quartz halogen light source filtered with a Corning® C-4010 filter to simulate a green-emitting fluorescent exposure. The elements were then processed in a process for X-ray film. Development was for 26 seconds at 35°C, fixing for 21 seconds at 35°C, and washing for 16 seconds at 32°C. D-min was measured with a densitometer. The results are reported in Table II.

## Table II

| | Polymer, Level($mg/dm^2$) | | Salt, Level($mg/dm^2$) | Dmin (fresh) | Dmin (incubated) |
|---|---|---|---|---|---|
| Control | none | | none | 0.10 | 0.12 |
| Invention | poly[bis(2-(2-methoxyethoxy)ethoxy) phosphazene], | 1.6 | $CF_3SO_3K$, 1.1 | 0.12 | 0.14 |
| Invention | poly[(2-(2-methoxyethoxy)ethoxy)$_{.9}$(trifluoroethoxy)$_{.1}$ phosphazene], | 1.6 | $CF_3SO_3K$, 1.1 | 0.10 | 0.08 |
| Comparison | A, | 1.6 | $CF_3SO_3K$, 1.1 | 0.10 | 0.23 |
| Comparison | B, | 1.6 | $CF_3SO_3K$, 1.1 | 0.12 | 0.23 |
| Comparison | C, | 1.6 | $CF_3SO_3K$, 1.1 | 0.12 | 1.00 |
| Comparison | D, | 1.6 | $CF_3SO_3K$, 1.1 | 0.16 | 0.44 |
| Comparison | E, | 1.6 | $CF_3SO_3K$, 1.1 | 0.12 | 0.27 |

A: $F(CF_2CF_2)_{3-8}CH_2CH_2O(CH_2CH_2O)_xH$, where x is 10-20, DuPont Zonyl* FSN.

B: Nonylphenoxypoly(oxyethylene)ethanol, sold by Rohm & Haas as Triton* X100.

C: A dimethylsiloxane-alkylene oxide copolymer, sold by Union Carbide as Silwet* L7605:

Table II (Cont'd)

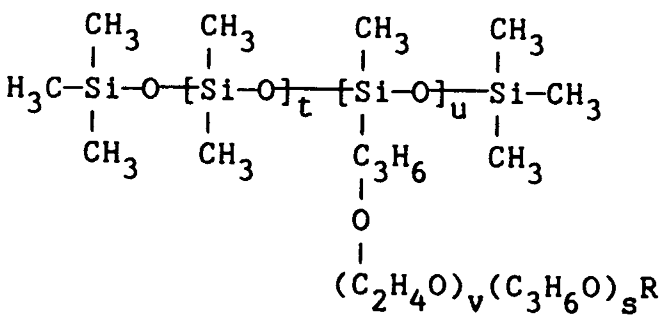

where t ≈ 5 to 100, u ≈ 2 to 50, v ≈ 5 to 50, and s ≈ 0 to 50

D: Polyoxyethylene(10)oleyl ether sold by ICI Americas as Brij*96

E: $HO-(CH_2CH_2O)_x-(CH_2CHCH_3O)_y-(CH_2CH_2O)_{x'}-H$, sold by BASF as Pluronic*L62LF, where x + x' ≈ 20 weight percent and y ≈ 80 weight percent and mol. wt. ≈ 2450.

The results in Table II indicate that photographic elements of the invention offer reduced fog upon keeping as compared to photographic elements having prior art antistatic compositions such as polyethylene oxide/salt combinations.

## Example 2

To measure the antistatic properties of compositions useful in the practice of the invention, coatings of mixtures of gelatin at 100 mg/ft$^2$, poly[bis(2-(2-methoxyethoxy)ethoxy)phosphazene at levels indicated in Table III, and $CF_3SO_3K$ at levels indicated in Table III were made on a polyester support. Surface resistivity was measured as in Example 1.

**Table III**

| Coating | Polyphosphazene Compound mg/ft$^2$ | $CF_3SO_3K$ mg/ft$^2$ | Surface Resistivity Log, ohm/sq 50%RH | Surface Resistivity Log, ohm/sq 20%RH |
|---|---|---|---|---|
| 1 (control) | none | none | 14.1 | >15.0 |
| 2 (control) | none | 8.5 | 13.3 | >15.0 |
| 3 (control) | 8.5 | none | 12.9 | 14.3 |
| 4 (control) | 17.0 | none | 12.7 | 14.2 |
| 5 | 8.5 | 8.5 | 10.9 | 11.3 |

The results in Table III indicate significant lowering of surface resistivity by the antistatic composition useful in the invention.

Example 3

Elements were prepared as in Example 2, but on various supports and with other binders at various coverage levels instead of gelatin, and various salts at various coverage levels. Surface resistivities were measured as in Example 1. The results are reported in Table IV.

Table IV

| Coating | Support | Polyphosphazene Level ($mg/ft^2$) | Binder, Level ($mg/ft^2$) | Salt, Level ($mg/ft^2$) | Surface Resistivity Log, Ohm/sq 50%RH | 20%RH |
|---|---|---|---|---|---|---|
| 6(control) | polyester | none | acrylic latex*, 120 | none | >15.0 | >15.0 |
| 7(control) | polyester | none | " | $LiBF_4$, 6 | 14.7 | >15.0 |
| 8(control) | polyester | none | " | $CF_3SO_3Li$, 6 | 10.4 | 13.3 |
| 9(control) | polyester | 12 | " | none | 14.5 | 14.4 |
| 10 | polyester | 12 | " | $LiBF_4$, 6 | 10.5 | 10.9 |
| 11 | polyester | 12 | " | $CF_3SO_3Li$, 6 | 9.4 | 10.7 |
| 12 | polyester | 24 | " | $CF_3SO_3Li$, 6 | 9.1 | 10.0 |
| 13(control) | cellulose acetate | none | Poly(methyl methacrylate), 60 | none | >15.0 | >15.0 |
| 14 | cellulose acetate | 15 | Poly(methyl methacrylate), 40 | $CF_3SO_3Li$, 5 | 9.9 | 10.2 |
| 15(control) | polyester | 12 | Hydrolyzed poly-(vinyl alcohol), 108 | none | 13.1 | 13.6 |
| 16 | polyester | 11 | Hydrolyzed poly-(vinyl alcohol), 98 | $CF_3SO_3Li$, 11 | 11.3 | 11.7 |
| 17 | polyester | 26 | Hydrolyzed poly-(vinyl alcohol), 77 | $CF_3SO_3K$, 9 | 10.4 | 11.2 |

*An 80/20 mixture of Rhoplex B88* and Rhoplex B60A*, available from Rohm and Haas

Table IV (Continued)

| Coating | Support | Polyphosphazene Level (mg/ft$^2$) | Binder, Level (mg/ft$^2$) | Salt, Level (mg/ft$^2$) | Surface Resistivity Log, Ohm/sq 50%RH | Surface Resistivity Log, Ohm/sq 20%RH |
|---|---|---|---|---|---|---|
| 18(control) | polyethylene resin-coextruded paper | none | gelatin, 120 | none | --- | 13.9 |
| 19(control) | polyethylene resin-coextruded paper | 12 | gelatin, 108 | none | --- | 13.6 |
| 20(control) | polyethylene resin-coextruded paper | none | gelatin, 108 | $C_4F_9SO_3K$, 12 | --- | 13.8 |
| 21 | polyethylene resin-coextruded paper | 12 | gelatin, 96 | $C_4F_9SO_3K$, 12 | --- | 11.3 |
| 22 | polyethylene resin-coextruded paper | 12 | gelatin, 102 | $C_4F_9SO_3K$, 6 | --- | 11.6 |
| 23(control) | cellulose acetate | none | Poly(methyl methacrylate), 60 | none | >15.0 | >15.0 |
| 24 | cellulose acetate | 5 | Poly(methyl methacrylate), 50 | $CF_3SO_3K$, 5 | 11.1 | 11.2 |
| 25 | cellulose acetate | 10 | Poly(methyl methacrylate), 45 | $CF_3SO_3K$, 5 | 10.5 | 10.8 |

The result in Table IV show that antistatic composition useful in the invention effectively decrease surface resistivity when coated on non-conducting supports.

Example 4

Elements were prepared and tested as in Example 3, but utilitizing the polyphosphazene of preparation 3. The results are presented in Table V.

**Table V**

| Coating | Support | Polyphosphazene Level ($mg/ft^2$) | Binder, Level ($mg/ft^2$) | Salt, Level ($mg/ft^2$) | Surface Resistivity Log, Ohm/sq 50%RH | Surface Resistivity Log, Ohm/sq 20%RH |
|---|---|---|---|---|---|---|
| 26(control) | polyester | none | acrylic latex*, 120 | none | >15.0 | >15.0 |
| 27(control) | polyester | none | " | $LiBF_4$, 6 | 14.7 | >15.0 |
| 28(control) | polyester | none | " | $CF_3SO_3Li$, 6 | 10.4 | 13.3 |
| 29 | polyester | 10 | " | $CF_3SO_3Li$, 10 | 9.4 | 11.4 |
| 30 | polyester | 5 | " | $CF_3SO_3Li$, 5 | 10.0 | 11.5 |
| 31 | polyester | 10 | hydrolyzed poly-(vinyl alcohol), 100 | $CF_3SO_3K$, 10 | 9.9 | 10.5 |
| 32 | polyester | 10 | hydrolyzed poly-(vinyl alcohol), 100 | $(CF_3SO_3)_2Ca$, 10 | 10.3 | 10.7 |
| 33 | polyester | 5 | hydrolyzed poly-(vinyl alcohol), 100 | $Zn(BF_4)_2$, 5 | 10.9 | 11.3 |
| 34 | polyester | 5 | hydrolyzed poly-(vinyl alcohol), 100 | $LiBF_4$, 5 | 10.4 | 11.0 |
| 35(control) | cellulose acetate | none | poly(methyl methacrylate), 60 | none | >15.0 | >15.0 |
| 36 | cellulose acetate | 15 | poly(methyl methacrylate), 40 | $CF_3SO_3Li$, 5 | 9.9 | 10.2 |

*An 80/20 mixture of Rhoplex B88* and Rhoplex*, available from Rohm & Haas

The results in Table V again show that antistatic compositions useful in the invention effectively decrease surface resistivity when coated on non-conducting supports.

Example 5

Elements were prepared and tested as in Example 3, but utilizing the polyphosphazene of Preparation 4. The results are presented in Table VI.

Table VI

| Coating | Support | Polyphosphazene Level ($mg/ft^2$) | Binder, Level ($mg/ft^2$) | Salt, Level ($mg/ft^2$) | Surface Resistivity Log, Ohm/sq 50%RH | 20%RH |
|---|---|---|---|---|---|---|
| 35(control) | polyester | none | hydrolyzed poly(vinyl alcohol), 120 | none | 14.2 | >15.0 |
| 36(control) | polyester | none | hydrolyzed poly(vinyl alcohol), 108 | $CF_3SO_3Li$, 12 | 12.3 | 14.4 |
| 37 | polyester | 7.8 | hydrolyzed poly(vinyl alcohol), 39 | $CF_3SO_3Li$, 3.9 | 9.8 | 10.2 |
| 38 | polyester | 3.9 | hydrolyzed poly(vinyl alcohol), 39 | $CF_3SO_3Li$, 3.9 | 9.5 | 10.1 |
| 39 | polyester | 5.7 | hydrolyzed poly(vinyl alcohol), 39 | $CF_3SO_3K$, 3.9 | 10.7 | 11.4 |
| 40 | polyester | 10.0 | hydrolyzed poly(vinyl alcohol), 50 | $(CF_3SO_3)_2Ca$, 5 | 10.3 | 10.7 |
| 41 | polyester | 10.0 | hydrolyzed poly(vinyl alcohol), 50 | $Zn(BF_4)_2$, 5 | 10.4 | 10.9 |

The results in Table VI show that antistatic compositions useful in the invention effectively decrease surface resistivity when coated on non-conducting supports.

Example 6

Elements were prepared and tested as in Example 3, but utilizing the polyphosphazene of Preparation 5. The results are presented in Table VII.

Table VII

| Coating | Support | Polyphosphazene Level ($mg/ft^2$) | Binder, Level ($mg/ft^2$) | Salt, Level ($mg/ft^2$) | Surface Resistivity Log, Ohm/sq 50%RH | 20%RH |
|---|---|---|---|---|---|---|
| 42(control) | cellulose acetate | none | poly(methyl methacrylate), 60 | none | >15.0 | >15.0 |
| 43(control) | cellulose acetate | 6 | " , 54 | none | >15.0 | >15.0 |
| 44(control) | cellulose acetate | none | " , 54 | $CF_3SO_3K$, 6 | >15.0 | >15.0 |
| 45 | cellulose acetate | 5.5 | " , 49 | $CF_3SO_3K$, 5.5 | 11.2 | 11.4 |
| 46 | cellulose acetate | 10 | " , 45 | $CF_3SO_3K$, 5 | 10.8 | 10.9 |
| 47(control) | cellulose acetate | none | " , 54 | $CF_3SO_3Li$, 6 | >15.0 | >15.0 |
| 48 | cellulose acetate | 5.5 | " , 49 | $CF_3SO_3Li$, 5.5 | 11.5 | 11.9 |
| 49(control) | cellulose acetate | none | " , 54 | $LiBF_4$, 6 | >15.0 | >15.0 |
| 50 | cellulose acetate | 5.5 | " , 49 | $LiBF_4$, 5.5 | 11.5 | 11.8 |

The results in Table VII show that antistatic compositions useful in the present invention effectively decrease surface resistivity when coated on non-conducting supports.

## Claims

**1.** A photographic element comprising a support having thereon an antistatic layer comprising a polymer

and a salt that complexes with the polymer, characterized in that the polymer is a polyphosphazene comprising repeating units of the formula:

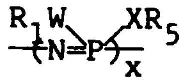 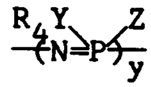

wherein x and y represent molar percentages, with x being 80 to 100% and y being 0 to 20%,

$R_1$ and $R_5$ each independently represents the formula $-(R_2\text{-}O)_n\text{-}R_3$ wherein n is 1 to 50, $R_2$ is randomly alkyl of from 2 to 4 carbon atoms, having from 2 to 4 carbon atoms in the straight chain between oxygen atoms, and $R_3$ is substituted or unsubstituted alkyl or alkenyl of from 1 to 18 carbon atoms,

W, X, and Y each independently represents -O-, -S-,

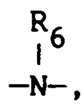, or 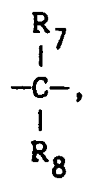,

Z represents $-OR_9$, $-SR_{10}$,

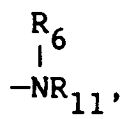, or 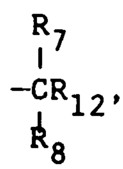,

wherein $R_4$, $R_6$, $R_7$, and $R_8$ each independently represents H, or substituted or unsubstituted alkyl or alkenyl of from 1 to 18 carbon atoms,

$R_9$ and $R_{10}$ each independently represents substituted or unsubstituted alkyl or alkenyl of from 1 to 18 carbon atoms or $-(R_{13}\text{-}O)_m\text{-}R_{14}$,

$R_{11}$ and $R_{12}$ each independently represents H, or substituted or unsubstituted alkyl or alkenyl of from 1 to 18 carbon atoms, or $-(R_{13}\text{-}O)_m\text{-}R_{14}$,

$R_{13}$ is randomly alkyl of from 2 to 4 carbon atoms, having from 2 to 4 carbon atoms in the straight chain between oxygen atoms,

$R_{14}$ is substituted or unsubstituted alkyl or alkenyl of from 1 to 18 carbon atoms, and

m is 0 to 50.

2. A photographic element according to Claim 1 wherein $R_2$ and $R_{13}$ each has 2 carbon atoms in the straight chain between oxygen atoms, n is from 2 to 10, and m is from 0 to 10.

3. A photographic element according to Claims 1 or 2 wherein W, X, and Y each independently represent -O-, and Z represents $-OR_9$.

4. A photographic element according to Claims 1-3 wherein $R_2$ and $R_{13}$ are each ethyl, and $R_3$, $R_4$, and $R_{14}$ are each independently ethyl or perfluoroethyl.

5. A photographic element according to Claims 1-4 wherein the salt is selected from the group consisting of $KCF_3SO_3$, $Ca(CF_3SO_3)_2$, $Zn(BF_4)_2$, $LiBF_4$, $NaBF_4$, $NaCF_3SO_3$, $LiCF_3SO_3$, $KCF_3CO_2$, $LiCF_3CO_2$, $NaCF_3CO_2$, $KC_3F_7CO_2$, $LiC_3F_7CO_2$, $NaC_3F_7CO_2$, $C_4F_9SO_3K$, and $KPF_6$.

6. A photographic element according to Claims 1-5 wherein said polyphosphazene is poly[bis-2-

(methoxyethoxy)-ethoxy]phosphazene.

7. A photographic element according to Claims 1-6 wherein the antistatic layer also includes a binder.

8. A photographic element according to Claim 7 wherein the binder is a hydrophilic colloid.

9. A photographic element according to Claim 8 wherein the binder is gelatin.

10. An antistatic composition comprising a polymer, a salt that complexes with the polymer, and a binder characterized in that the polymer is a polyphosphazene as defined in any one of claims 1 to 4 and 6.

**Revendications**

1. Un élément photographique comprenant un support portant une couche antistatiqine comprenant un polymère et un sel qui forme un complexe avec le polymère, caractérisé en ce que le polymère est un polyphosphazène comprenant des motifs récurrents de formules :

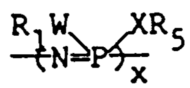

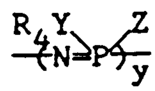

dans lesquelles x et y représentent des pourcentages molaires x étant de 80 à 100 % et y étant de 0 à 20 %,

$R_1$ et $R_5$ représentent chacun indépendamment un groupe de formule $-(R_2-O)_n-R_3$ dans laquelle n est un nombre de 1 à 50, $R_2$ est statistiquement un groupe alkyle en $C_2$-$C_4$, ayant de 2 à 4 atomes de carbone en chaîne droite entre des atomes d'oxygène, et $R_3$ est un groupe alkyle ou alcényle en $C_1$-$C_{18}$ substitué ou non,

W, X et Y représentent chacun indépendamment -O-, -S-,

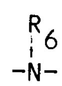 ou 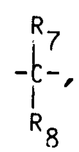

Z représente $-OR_9$, $-SR_{10}$,

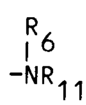 ou 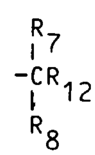

où $R_4$, $R_6$ , $R_7$ et $R_8$ représentent chacun indépendamment H ou un groupe alkyle ou alcényle en $C_1$-$C_{18}$ substitué ou non,

$R_9$ et $R_{10}$ représentent chacun indépendamment un groupe alkyle ou alcényle en $C_1$-$C_{18}$ substitué ou non ou un groupe $-(R_{13}-O)_m-R_{14}$,

$R_{11}$ et $R_{12}$ représentent chacun indépendamment H ou un groupe alkyle ou alcényle en $C_1$-$C_{18}$ substitué ou non ou un groupe $-(R_{13}-O)_m-R_{14}$,

$R_{13}$ est statistiquement un groupe alkyle en $C_2$-$C_4$, ayant de 2 à 4 atomes de carbone en chaîne droite entre des atomes d'oxygène,

$R_{14}$ est un groupe alkyle ou alcényle en $C_1$-$C_{18}$ substitué ou non et

m est un nombre de 0 à 50.

2. Un élément photographique selon la revendication 1, caractérisé en ce que $R_2$ et $R_{13}$ ont chacun 2

atomes de carbone en chaîne droite entre les atomes d'oxygène, n est un nombre de 2 à 10 et m est un nombre de 0 à 10.

3. Un élément photographique selon la revendiction 1 ou 2, caractérisé en ce que W, X et Y représentent chacun -O- et Z représente $-OR_9$.

4. Un élément photographique selon les revendications 1-3, caractérisé en ce que $R_2$ et $R_{13}$ représentent chacun un groupe éthyle et $R_3$, $R_4$ et $R_{14}$ sont chacun indépendamment un groupe éthyle ou perfluoroéthyle.

5. Un élément photographique selon les revendications 1-4, caractérisé en ce que le sel est choisi parmi $KCF_3SO_3$, $Ca(CF_3SO_3)_2$, $Zn(BF_4)_2$, $LiBF_4$, $NaBF_4$, $NaCF_3SO_3$, $LiCF_3SO_3$, $KCF_3CO_2$, $LiCF_3CO_2$, $NaCF_3CO_2$, $KC_3F_7CO_2$, $LiC_3F_7CO_2$, $NaC_3F_7CO_2$, $C_4F_9SO_3K$ et $KPF_6$.

6. Un élément photographique selon les revendications 1-5, caractérisé en ce que ledit phosphazène est le poly[bis-2-(méthoxyéthoxy)-éthoxy]phosphazène.

7. Un élément photographique selon les revendications 1-6, caractérisé en ce que la couche antistatique contient également un liant.

8. Un élément photographique selon la revendication 7, caractérisé en ce que le liant est un liant colloïdal hydrophile.

9. Un élément photographique selon la revendication 8, caractérisé en ce que le liant est la gélatine.

10. Une composition antistatique comprenant un polymère, un sel qui forme un complexe avec le polymère et un liant, caracté-risée en ce que le polymère est un polyphosphazène selon l'une quelconque des revendications 1 à 4 et 6.

## Patentansprüche

1. Photographisches Element mit einem Träger, auf dem sich eine antistatische Schicht mit einem Polymer und einem Salz, das zur Komplexbildung mit dem Polymer befähigt ist, befindet, dadurch gekennzeichnet, daß das Polymer ein Polyphosphazen mit wiederkehrenden Einheiten der Formel:

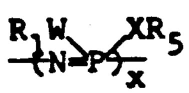

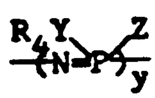

ist, in der x und y molare Prozentsätze angeben, wobei x für 80 bis 100 % und y für 0 bis 20 % steht, $R_1$ und $R_5$ jeweils unabhängig voneinander der Formel $-(R_2-O)_n-R_3$ entsprechen, in der n für 1 bis 50 steht, $R_2$ willkürlich Alkyl mit 2 bis 4 Kohlenstoffatomen mit 2 bis 4 Kohlenstoffatomen in der geraden Kette zwischen Sauerstoffatomen ist, und R für substituiertes oder unsubstituiertes Alkyl oder Alkenyl mit 1 bis 18 Kohlenstoffatomen steht,
W, X und Y jeweils unabhängig voneinander stehen für -O-, -S-,

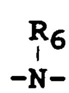 oder 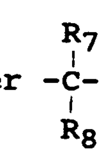 ,

Z steht für $-OR_9$, $-SR_{10}$,

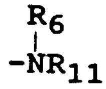 oder 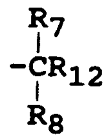

worin $R_4$, $R_6$, $R_7$ und $R_8$ jeweils unabhängig voneinander stehen für H oder substituiertes oder unsubstituiertes Alkyl oder Alkenyl mit 1 bis 18 Kohlenstoffatomen,

$R_9$ und $R_{10}$ jeweils unabhängig voneinander stehen für substituiertes oder unsubstituiertes Alkyl oder Alkenyl mit 1 bis 18 Kohlenstoffatomen oder $-(R_{13}-O)_m-R_{14}$,

$R_{11}$ und $R_{12}$ jeweils unabhängig voneinander darstellen H oder substituiertes oder unsubstituiertes Alkyl oder Alkenyl mit 1 bis 18 Kohlenstoffatomen oder $-(R_{13}-O)_mR_{14}$,

$R_{13}$ willkürlich Alkyl mit 2 bis 4 Kohlenstoffatomen mit 2 bis 4 Kohlenstoffatomen in der geraden Kette zwischen Sauerstoffatomen ist,

$R_{14}$ ein substituiertes oder unsubstituiertes Alkyl oder Alkenyl mit 1 bis 18 Kohlenstoffatomen darstellt und

m gleich 0 bis 50 ist.

**2.** Photographisches Element nach Anspruch 1, in dem $R_2$ und $R_{13}$ jeweils 2 Kohlenstoffatome in der geraden Kette zwischen Sauerstoffatomen aufweisen, n für 2 bis 10 steht und m für 0 bis 10.

**3.** Photographisches Element nach Ansprüchen 1 oder 2, worin W, X und Y jeweils unabhängig voneinander stehen für -O-, und Z für $-OR_9$.

**4.** Photographisches Element nach Ansprüchen 1-3, worin $R_2$ und $R_{13}$ jeweils für Ethyl stehen und $R_3$, $R_4$ und $R_{14}$ jeweils unabhängig voneinander Ethyl oder Perfluoroethyl bedeuten.

**5.** Photographisches Element nach Ansprüchen 1-4, in dem das Element ausgewählt ist aus der Gruppen von Salzen:
$KCF_3SO_3$, $Ca(CF_3SO_3)_2$, $Zn(BF_4)_2$, $LiBF_4$, $NaBF_4$, $NaCF_3SO_3$, $LiCF_3SO_3$, $KCF_3CO_2$, $LiCF_3CO_2$, $NaCF_3CO_2$, $KC_3F_7CO_2$, $Lic_3F_7c0_2$, $NaC_3F_7CO_2$, $C_4F_9SO_3K$ und $KPF_6$.

**6.** Photographisches Element nach Ansprüchen 1-5, in dem das Polyphosphazen Poly[bis-2-(methoxyethoxy)-ethoxy]phosphazen ist.

**7.** Photographisches Element nach Ansprüchen 1-6, in dem die antistatische Schicht auch ein Bindemittel enthält.

**8.** Photographisches Element nach Anspruch 7, in dem das Bindemittel ein hydrophiles Kolloid ist.

**9.** Photographisches Element nach Anspruch 8, in dem das Bindemittel Gelatine ist.

**10.** Antistatische Zusammensetzung mit einem Polymer, einem Salz, das zur Komplexbildung mit dem Polymer befähigt ist und einem Bindemittel, dadurch gekennzeichnet, daß das Polymer ein Polyphosphazen nach einem der Ansprüche 1 bis 4 und 6 ist.